# EUROPÄISCHE PATENTSCHRIFT

(11) **EP 1 233 323 B1**
(45) Veröffentlichungstag und Bekanntmachung des Hinweises auf die Patenterteilung: **12.12.2007**
(21) Anmeldenummer: 02003499.7
(22) Anmeldetag: 15.02.2002
(51) Int. Cl.: G05G 1/14, B60T 7/06

(54) **Pedal**
Pedal
Pédale

(30) Priorität: 20.02.2001 DE 10107898
(43) Veröffentlichungstag der Anmeldung: 21.08.2002
(73) Patentinhaber: Siemens VDO Automotive AG, 93055 Regensburg (DE)
(72) Erfinder: Beil, Egon, 61197 Florstadt (DE); Wehner, Andreas, 61389 Schmitten (DE)

(56) Entgegenhaltungen:
- DE-A- 19 504 971
- US-A- 6 019 016

## Beschreibung

Die Erfindung betrifft ein Pedal, insbesondere ein Fahrpedal für ein Kraftfahrzeug, mit einem Pedalarm, welcher an seinem ersten Endbereich um eine in einem Gehäuse gelagerte Schwenkachse schwenkbar ist und an seinem zweiten Endbereich von einer Kraft, insbesondere einer Fußkraft, auslenkbar ist, wobei der Pedalarm von einer Startstellung über eine Zwischenstellung in eine durch einen Endanschlag bestimmte Endstellung verschwenkbar ist, wobei über einen an dem Gehäuse angeordneten Hebel die Verschwenkung des Pedalarms mittels einer Sensoreinheit erfaßbar ist.

Siehe z.B. DE-A-19504971).

Pedale der oben genannten Art werden heute vielfach als Fahrpedale bei Kraftfahrzeugen zur Steuerung der Geschwindigkeit eingesetzt. Hierbei lenkt beim Betrieb des Kraftfahrzeugs der Fahrer des Kraftfahrzeugs den Pedalarm des Pedals mittels Fußkraft aus, um eine bestimmte Geschwindigkeit des Kraftfahrzeugs zu erreichen. Die Auslenkung des Pedalarms ist dabei üblicherweise an eine Steuereinheit gekoppelt, über die die Geschwindigkeit des Kraftfahrzeugs einstellbar ist. Allgemein gilt: Je größer die Auslenkung des Pedalarms, desto größer die Geschwindigkeit des Kraftfahrzeugs.

Zur Steuerung der Geschwindigkeit des Kraftfahrzeugs ist das Pedal üblicherweise mechanisch oder elektronisch an eine Drosselklappe oder eine Diesel-Einspritzpumpe gekoppelt, über die die dem Vergaser zuzuführende Frischgasmenge bzw. Dieselmenge einstellbar ist. Bei einer mechanischen Kopplung zwischen dem Fahrpedal und der Drosselklappe bzw. der Diesel-Einspritzpumpe weist das mechanische System mit mehreren bewegten Elementen Reibung auf. Dadurch wird es dem Fahrer des Kraftfahrzeugs erleichtert, die Pedalstellung bei Relativbeschleunigungen zwischen dem Kraftfahrzeug und dem Fuß annähernd konstant zu halten, dies gilt insbesondere bei Ruck- und Stoßbewegungen, die auf Schlechtwegstrecken auftreten können. Durch die Reibung der mechanischen Elemente wird die Muskulatur des Fahrers des Kraftfahrzeugs bei längeren Fahrten mit annähernd konstanter Pedalstellung entlastet.

Bei einer elektronischen Kopplung zwischen dem Fahrpedal und der Drosselklappe bzw. der Diesel-Einspritzpumpe ist über einen in dem Fahrpedal integrierten Sollwertgeber der Drosselklappe eine bestimmte Position vorgebbar bzw. der Diesel-Einspritzpumpe eine bestimmte Dieselmenge zuweisbar. Aufgrund der fehlenden mechanischen Anbindung entfällt jedoch die bisher bei den mechanischen Systemen vorhandene mechanische Hysterese. Um nun auch bei einer elektronischen Kopplung zwischen dem Fahrpedal und dem Drosselklappenstutzen dem Fahrer das Gefühl einer Hysterese zu vermitteln, ist üblicherweise zur Erzeugung einer für den Fahrer des Kraftfahrzeugs spürbaren mechanischen Hysterese eine Reibungseinheit in das Pedal integriert.

Die Verschwenkbarkeit des Pedalarms des Pedals ist üblicherweise durch einen ersten Anschlag und einen zweiten Anschlag begrenzt. Der erste Anschlag legt dabei die Ausgangsposition des Pedalarms und der zweite Anschlag die Endstellung des Pedalarms fest. Diese beiden Anschläge können an einem Gehäuse angeordnet sein, das beispielsweise auch zur Lagerung der Schwenkachse vorgesehen ist. Die beiden Anschläge können aber auch außerhalb des Pedals angeordnet sein. Weiterhin gibt es Pedale, bei denen der erste Anschlag, insbesondere der Startanschlag, mit einem beispielsweise die Schwenkachse des Pedalarms umschließenden Gehäuse gekoppelt ist und der zweite Anschlag, insbesondere der Endanschlag, außerhalb des Pedals angeordnet ist. Befindet sich der Endanschlag außerhalb des Pedals, so ist bei der Justage des Pedals der Pedalarm relativ zu dem Endanschlag zu justieren. Diese Justagearbeiten gestalten sich insbesondere dann als schwierig, wenn zur Erfassung der Bewegung des Pedalarms des Pedals eine Sensoreinheit vorgesehen ist, über die die Bewegung des Pedalarms elektronisch erfaßbar ist. Bei einer derartigen Anordnung ist es einerseits erforderlich, den Bewegungsbereich des Pedalarms zuverlässig an die Sensoreinheit zu koppeln und andererseits den Pedalarm relativ zu einem externen Endanschlag zu justieren.

Der Erfindung liegt daher die Aufgabe zugrunde, ein Pedal der oben genannten Art anzugeben, bei dem der Bewegungsbereich des Pedalarms besonders einfach an eine elektronische Sensoreinheit zu koppeln ist und dessen Pedalarm in besonders einfacher Weise relativ zu einem externen Endanschlag justierbar ist.

Diese Aufgabe wird erfindungsgemäß dadurch gelöst, dass die Verschwenkung des Pedalarms von der Startstellung bis zur Zwischenstellung mit dem Hebel gekoppelt und von der Sensoreinheit erfaßbar ist, wobei die Startstellung des Pedalarms als Anfangsposition und die Zwischenstellung des Pedalarms als Endposition für die Sensoreinheit erfaßbar ist, und daß die Bewegung des Pedalarms ab der Zwischenstellung bis zur Endstellung von dem Hebel entkoppelt ist.

Die Erfindung geht dabei von der Überlegung aus, daß ein Pedal, dessen Pedalarm besonders einfach an eine Sensoreinheit koppelbar und dessen Pedalarm weiterhin besonders einfach relativ zu einem externen Endanschlag justierbar ist, möglichst weitreichend vormontierbar sein sollte, um den Montageaufwand für das Pedal besonders gering zu halten. Daher sollte der Erfassungsbereich der Sensoreinheit relativ zu dem Pedalarm in einem vorgegebenen Bewegungsbereich einstellbar sein. Zur Vermeidung aufwendiger Justierarbeiten könnte dann der Pedalarm einen Bewegungsbereich aufweisen, bei dem der Pedalarm lediglich zu dem Endanschlag hin bewegt wird, jedoch die Sensoreinheit nicht mehr aktiv die Bewegung des Pedalarms erfaßt. Hierzu ist die Verschwenkung des Pedalarms von der Startstellung bis zur Zwischenstellung mit dem Hebel gekoppelt und von der Sensoreineit erfaßbar. Die Bewegung des Pedalarms wiederum ist ab der Zwischenstellung bis zur Endstellung von dem Hebel entkoppelt.

Vorteilhafterweise ist der Pedalarm von einem Rückstellfederelement in seine Startstellung zurückschwenkbar beaufschlagt, wobei der Pedalarm über das Rückstellfederelement gegen den Hebel beaufschlagt ist. Hierdurch wird insbesondere bei einer elektronischen Ankopplung zwischen dem Gaspedal und der Drosselklappe zuverlässig eine mechanische Hysterese beim Verschwenken des Pedalarms erzeugt. Denn das Rückstellfederelement setzt bei zunehmendem Herunterdrücken des Pedalarms der Verschwenkung des Pedalarms eine ansteigende Widerstandskraft entgegen.

Vorteilhafterweise umfaßt der Hebel einen ersten Hebelarm und einen zweiten Hebelarm wobei der erste Hebelarm den Pedalarm beaufschlagt und der zweite Hebelarm mit der Sensoreinheit verbunden ist, wobei der Verschwenkungsbereich des zweiten Hebelarms durch einen Leerlaufanschlag und einen Volllastanschlag begrenzt ist. Dabei ist der zweite Hebelarm, der mit der Sensoreinheit verbundene, derart ausgelegt, daß sobald der zweite Hebelarm des Hebels den Volllastanschlag berührt, eine Weiterbewegung des Hebels gehemmt ist, jedoch der Pedalarm weiter von einer externen Kraft solange verschwenkbar ist, bis er gegen den externen Endanschlag gelangt. Mittels eines zweiarmigen Hebels ist in besonders einfacher Weise eine Entkopplung des Pedalarms von dem aktiven Erfassungsbereich der Sensoreinheit realisiert.

Die mit der Erfindung erzielten Vorteile bestehen insbesondere darin, daß durch die Ankopplung der Bewegung des Pedalarms des Pedals an die Sensoreinheit in einem durch den Hebel vorgegebenen Bewegungsbereich aufwendige Justagearbeiten für das Pedal nicht erforderlich sind. Dabei weist das Pedal gleichzeitig einen besonders geringen Herstellungsaufwand und Wartungsaufwand auf. Der externe Endanschlag kann dabei besonders starke Kräfte abfangen, die auf den Pedalarm des Pedals ausgeübt werden, ohne dabei auf die Sensoreinheit zu wirken.

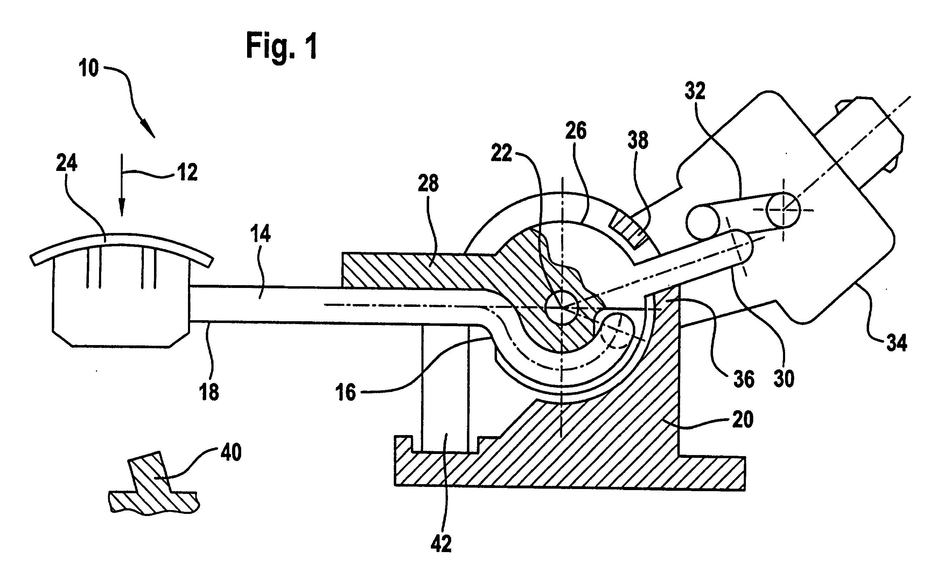

Ein Ausführungsbeispiel der Erfindung wird anhand einer Zeichnung näher erläutert. Darin zeigen die Figuren:
- Fig.: 1: schematisch ein Pedal in einer Startstellung,
- Fig.: 2: schematisch das Pedal gemäß Fig. 1 in einer Zwischenstellung und
- Fig.: 3: schematisch das Pedal gemäß den Fig. 1 u. 2 in einer Endstellung.

Das Pedal 10 gemäß Figur 1 ist als Fahrpedal eines Kraftfahrzeugs ausgebildet und durch eine Kraft 12, insbesondere eine Fußkraft, eines Fahrers zu betätigen. Mit der Betätigung des Pedals 10 steuert der Fahrer die Geschwindigkeit des Kraftfahrzeugs. Der Fahrer und das Kraftfahrzeug sind in der Zeichnung nicht näher dargestellt.

Das Pedal 10 umfaßt einen Pedalarm 14 mit einem ersten Endbereich 16 und einem zweiten Endbereich 18. Der erste Endbereich 16 des Pedalarms 14 ist um eine in einem Gehäuse 20 angeordnete Schwenkachse 22 schwenkbar, an der der Pedalarm 14 mittelbar angeordnet ist. Der zweite Endbereich 18 des Pedalarms 14 weist eine Pedalplatte 24 auf, die von der Kraft 12 des nicht näher dargestellten Fahrers des ebenfalls nicht näher dargestellten Kraftfahrzeugs betätigbar ist.

Der Pedalarm 14 ist über einen zweiarmigen Hebel 26 an der Schwenkachse 22 angeordnet. Der erste Hebelarm 28 des zweiarmigen Hebels 26 beaufschlagt den Pedalarm 14. Der zweite Hebelarm 30 des Hebels 26 beaufschlagt ein Hebelelement 32, das einer Sensoreinheit 34 zugeordnet ist. Der Bewegungsbereich des zweiten Hebelarms 30 des Hebels 26 ist durch einen Leerlaufanschlag 36 und einen Volllastanschlag 38 begrenzt.

Da der erste Hebelarm 28 des zweiarmigen Hebels 26 starr mit dem zweiten Hebelarm 30 des zweiarmigen Hebels 26 verbunden ist und der Bewegungsbereich des zweiten Hebelarms 30 des zweiarmigen Hebels 26 durch einen Leerlaufanschlag 36 begrenzt ist, begrenzt der Leerlaufanschlag 36 gleichzeitig auch die Startstellung des Pedalarms 14. Die Endstellung des Pedalarms 14 wird durch einen externen Endanschlag 40 begrenzt.

Der erste Hebelarm 28 des zweiarmigen Hebels 26 ist gegen den Pedalarm 14 beaufschlagt. Hierzu drückt ein an dem Gehäuse 20 abgestütztes Rückstellfederelement 42 den Pedalarm 14 gegen den ersten Hebelarm 28 des zweiarmigen Hebels 26. Das Rückstellfederelement 42 dient gleichzeitig zur Erzeugung einer mechanischen Hysterese für das Pedal 10. Dies wird dadurch erreicht, dass das Rückstellfederelement 42 beim Hinunterdrücken des Pedalarms 14 durch eine externe Kraft 12 der externen Kraft 12 eine mit zunehmendem Hinunterdrücken des Pedalarms 14 ansteigende Widerstandskraft entgegensetzt. Das Rückstellfederelement 42 ist in der Zeichnung nur schematisch dargestellt.

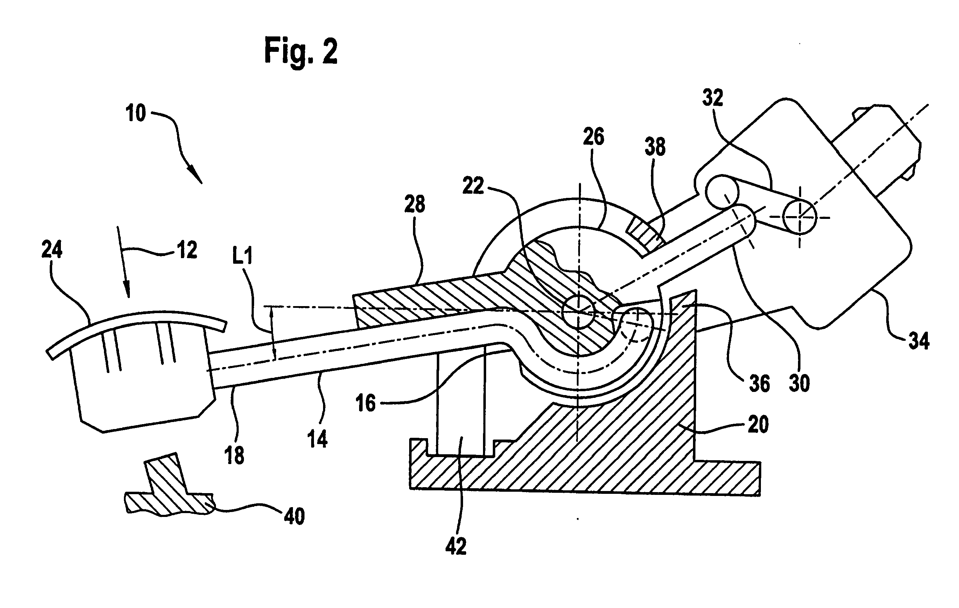

Beim Betrieb des Pedals 10 wird der Pedalarm 14 durch eine externe Kraft 12 gegen den Uhrzeugersinn, also gemäß Figur 1 nach unten, verschwenkt. Figur 1 zeigt dabei den Pedalarm 14 des Pedals 10 in seiner Startstellung. In Figur 2 ist der Pedalarm 14 in seiner Zwischenstellung dargestellt. In der Zwischenstellung ist der Pedalarm 14 um einen Winkel L1 gegenüber der Startstellung ausgelenkt. In dieser Zwischenstellung liegt der erste Hebelarm 28 des zweiarmigen Hebels 26 an dem Pedalarm 14 an. Der zweite Hebelarm 30 des zweiarmigen Hebels 26 berührt in der Zwischenstellung des Pedalarms 14 den Volllastanschlag 38.

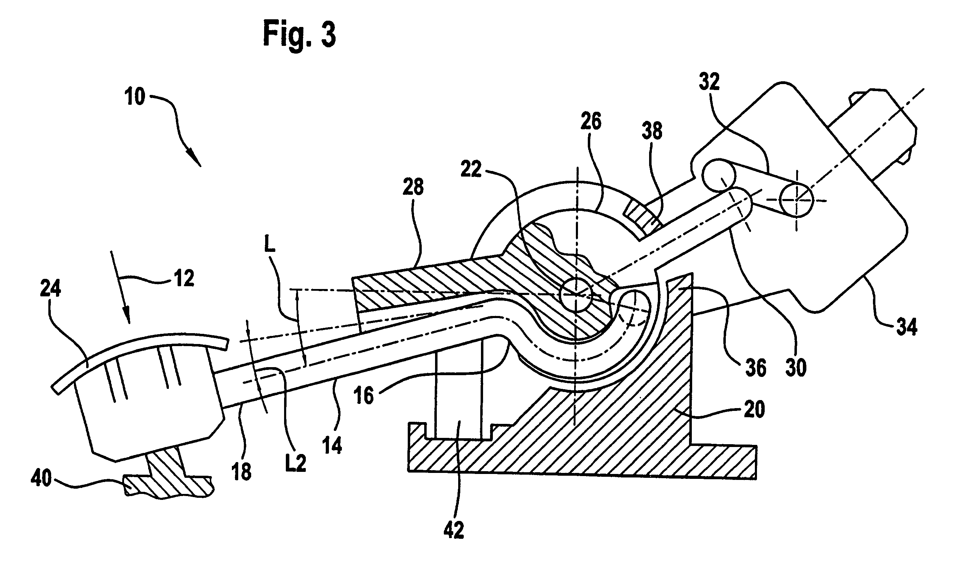

Bewegt nun die externe Kraft 12 den Pedalarm 14 weiter gegen den Uhrzeigersinn, so erreicht der Pedalarm 14 schließlich die Endstellung, die in Figur 3 dargestellt ist. Der Pedalarm 14 ist nun um einen Winkel L2 gegenüber seiner Zwischenstellung und insgesamt um einen Winkel L ausgelenkt. Die Pedalplatte 24 berührt mit ihrer Unterseite den externen Endanschlag 40. Der zweite Hebelarm 30 des zweiarmigen Hebels 26 liegt an dem Volllastanschlag 38 an. Hierdurch folgt der fest mit dem zweiten Hebelarm 30 des zweiarmigen Hebels 26 gekoppelte erste Hebelarm 28 des zweiarmigen Hebels 26 nicht weiter der Bewegung der Pedalarms 14 sondern der erste Hebelarm 28 des zweiarmigen Hebels 26 ist in der Position der Zwischenstellung des Pedalarms 14 festgehalten. Trotz der Festsetzung des Hebels 26 durch den Volllastanschlag 38 bewegt sich der Pedalarm 14 bei Einwirkung der externen Kraft 12 auf die Pedalplatte 24 weiter gegen den Uhrzeigersinn, da der Pedalarm 14 in dem Gehäuse 20 mit so viel Spiel gelagert ist, dass er diese Bewegung trotz der Festsetzung des zweiarmigen Hebels 26 ausführen kann.

Bei einer Bewegung des Pedalarms 14 von der Zwischenstellung zur Endstellung befindet sich der zweite Hebelarm 30 des zweiarmigen Hebels 26 in einer durch den Volllastanschlag 38 definierten festen Positon. Daher erfaßt die Sensoreinheit 34 nicht die Bewegung des Pedalarms 14 von der Zwischenstellung bis zur Endstellung des Pedalarms 14. Der von der Sensoreinheit 34 erfaßbare Bereich der Bewegung des Pedalarms 14 ist also auf den Bereich von der Startposition des Pedalarms 14 bis zur Zwischenposition des Pedalarms 14 festgelegt. Hierdurch ist die Sensoreinheit 34 schon vor dem Einbau des Pedals 10 in beispielsweise ein Kraftfahrzeug relativ zu dem Bewegungsbereich des Pedalarms 14 des Pedals 10 justierbar. Die Sensoreinheit 34 ist dabei mittels des Leerlaufanschlags 36 und des Volllastanschlags 38 relativ zu dem Bewegungsbereich des Pedalarms 14 einstellbar. Hierdurch ist das Pedal 10 fast vollstandig vormontierbar.

Der Pedalarm 14 ist über den von der Sensoreinheit 34 erfaßbaren Bereich hinaus von der Zwischenstellung in die Endstellung bewegbar. Hierdurch ist zuverlässig gewährleistet, dass der Pedalarm 14 auch besonders starke externe Kräfte 12 abfangen kann. Hätte das Pedal 10 keinen externen Endanschlag 40, so müßte das Gehäuse 20 die auf den Pedalarm 14 wirkenden Kräfte vollständig abfangen. Dies würde eine besonders hohe Stabilität des Gehäuses 20 voraussetzen. Die Entkopplung des Erfassungsbereichs der Sensoreinheit 34 und des vollständigen Bewegungsbereichs des Pedalarms 14 des Pedals 10 vermeidet dabei besonders zuverlässig einen Signalüberhub in der Sensoreinheit. Weiterhin ist das Pedal 10 fast vollständig vomontierbar, wobei die Sensoreinheit 34 schon werksseitig relativ zu dem Bewegungsbereich des Pedalarms 14 vorjustierbar ist.

## Patentansprüche

1. Pedal (10), insbesondere ein Fahrpedal für ein Kraftfahrzeug, mit einem Pedalarm (14), welcher an seinem ersten Endbereich (16) um eine in einem Gehäuse (20) gelagerte Schwenkachse (22) schwenkbar ist und an seinem zweiten Endbereich (18) von einer Kraft (12), insbesondere einer Fußkraft, auslenkbar ist, wobei der Pedalarm (14) von einer Startstellung über eine Zwischenstellung in eine durch einen Endanschlag (40) bestimmte Endstellung verschwenkbar ist, wobei über einen an dem Gehäuse (20) angeordneten Hebel (26) die Verschwenkung des Pedalarms (14) mittels einer Sensoreinheit (34) erfaßbar ist, **dadurch gekennzeichnet, daß** die Verschwenkung des Pedalarms (14) von der Startstellung bis zur Zwischenstellung mit dem Hebel (26) gekoppelt und von der Sensoreinheit (34) erfaßbar ist, wobei die Startstellung des Pedalarms (14) als Anfangsposition und die Zwischenstellung des Pedalarms (14) als Endposition für die Sensoreinheit (34) erfaßbar ist, und daß die Bewegung des Pedalarms (14) ab der Zwischenstellung bis zur Endstellung von dem Hebel (26) entkoppelt ist.

2. Pedal (10) nach Anspruch 1, bei dem der Pedalarm (14) von einem Rückstellfederelement (42) in seine Startstellung zurückschwenkbar beaufschlagt ist, **dadurch gekennzeichnet, daß** der Pedalarm (14) über das Rückstellfederelement (42) gegen den ersten Hebelarm (28) des zweiarmigen Hebels (26) beaufschlagt ist.

3. Pedal (10) nach Anspruch 1 oder 2, bei dem der Hebel (26) einen ersten Hebelarm (28) und einen zweiten Hebelarm (30) umfaßt **dadurch gekennzeichnet, daß** der erste Hebelarm (26) den Pedalarm (14) beaufschlagt und der zweite Hebelarm (30) mit der Sensoreinheit (34) gekoppelt ist, wobei der Verschwenkungsbereich des zweiten Hebelarms (30) durch einen Leerlaufanschlag (36) und einen Vollastanschlag (38) begrenzt ist.

## Claims

1. Pedal (10), especially an accelerator pedal for a motor vehicle, having a pedal arm (14), which at its first end (16) can be pivoted about a pivot axis (22) supported in a housing (20) and at its second end (18) can be deflected by a force (12), in particular by the force of a foot, the pedal arm (14) being capable of pivoting from a starting position via an intermediate position into a limit position defined by a limit stop (40), a sensor unit (34) being able to detect the pivoting of the pedal arm (14) by way of a lever (26) arranged on the hosing (20), **characterized in that** from the starting position to the intermediate position the pivoting of the pedal arm (14) is coupled to the lever (26) and can be detected by the sensor unit (34), the starting position of the pedal arm (14) representing the initial position and its intermediate position representing the final position for detection by the sensor unit (34), and that from the intermediate position to the limit position the movement of the pedal arm (14) is decoupled from the lever (26).

2. Pedal (10) according to Claim 1, in which the pedal arm (14) can be returned to its starting position under the action of a return spring element (42), **characterized in that** the pedal arm (14) is acted upon by the return spring element (42) in opposition to the first lever arm (28) of the two-armed lever (26).

3. Pedal (10) according to Claim 1 or 2, in which the lever (26) comprises a first lever arm (28) and a second lever arm (30), **characterized in that** the first lever arm (26) acts upon the pedal arm (14) and the second lever arm (30) is coupled to the sensor unit (34), the pivoting range of the second lever arm (30) being defined by an idling stop (36) and a full-load stop (38).

## Revendications

1. Pédale (10), notamment pédale d'accélérateur pour véhicule automobile, ladite pédale comportant un bras de pédale (14), lequel peut, à sa première extrémité (16), pivoter autour d'un axe de pivotement (22) suspendu dans un boîtier (20) et, à sa deuxième extrémité (18), être déplacé par une force (12), notamment une force appliquée par un pied, où le bras de pédale (14) peut, en partant d'une position de départ et en passant par une position intermédiaire, pivoter dans une position finale déterminée par une butée (40) de fin de course et où le pivotement du bras de pédale (14) peut, par l'intermédiaire d'un levier (26) placé sur le boîtier (20), être détecté au moyen d'un ensemble capteur (34), **caractérisée par le fait que** le pivotement du bras de pédale (14) entre la position de départ et la position intermédiaire est couplé au levier (26) et peut être détecté par l'ensemble capteur (34), la position de départ du bras de pédale (14) étant détectée par l'ensemble capteur (34) comme position initiale et la position intermédiaire du bras de pédale (14), comme position finale et que le mouvement du bras de pédale (14) est découplé du levier (26) entre la position intermédiaire et la position de fin de course.

2. Pédale (10) selon la revendication 1, dans laquelle le bras de pédale (14) est soumis à l'effet d'un élément (42) à ressort de rappel qui le ramène dans sa position de départ, **caractérisée par le fait que** le bras de pédale (14) est appliqué contre la première branche (28) du levier (26) à deux branches par l'élément (42) à ressort de rappel.

3. Pédale (10) selon la revendication 1 ou 2, dans laquelle le levier (26) comprend une première branche (28) et une deuxième branche (30), **caractérisée par le fait que** la première branche (28) du levier agit sur le bras de pédale (14) et que la deuxième branche (30) est couplée à l'ensemble capteur (34), alors que la plage de pivotement de la deuxième branche (30) du levier est limitée par une butée (36) de marche au ralenti et une butée (38) de marche à pleins gaz.
